Europäisches Patentamt

European Patent Office

Office européen des brevets

(11) Publication number: **0 152 687**
A1

## EUROPEAN PATENT APPLICATION

(21) Application number: 84308410.4

(22) Date of filing: 04.12.84

(51) Int. Cl.⁴: **G 01 M 3/00, G 01 M 3/18**

(30) Priority: 27.12.83 US 566020

(43) Date of publication of application: 28.08.85
Bulletin 85/35

(84) Designated Contracting States: BE DE FR GB IT LU NL

(71) Applicant: THE BABCOCK & WILCOX COMPANY,
1010 Common Street P.O. Box 60035, New Orleans
Louisiana 70160 (US)

(72) Inventor: Birchak, James Robert, 3902 Cypressdale,
Spring Texas 77388 (US)
Inventor: Holt, Amos Earl, 613 Old Graves Mill Road,
Lynchburg Virginia 24502 (US)
Inventor: Flora, John Harris, 1508 Wedgewood Road,
Lynchburg Virginia 24503 (US)

(74) Representative: Cotter, Ivan John et al, D. YOUNG &
CO. 10 Staple Inn, London WC1V 7RD (GB)

(54) Tube inspection apparatus.

(57) In electromagnetic inspection apparatus for detecting, in-situ, the location and character of flaws in a relatively long, thick-walled small bore tube (1) of a heat exchanger, a resultant magnetic field ($B_a$) of selected direction and magnitude is induced in the wall of the tube by the vector addition of magnetic fields ($B_s$, $B_c$) produced by two magnetic field generators (10, 16), at least one of which (10) is carried by a scanner (4) for traversing the tube and having an array of sensors (22) mounted in close proximity to the wall of the tube (11) for generating a unique signal as the scanner passes a flaw in the tube.

1

# TUBE INSPECTION APPARATUS

This invention relates to apparatus for inspecting, in-situ, heat exchanger tubes.

Before being placed in service and during operation, it is essential that the tubes in such heat exchangers be free of significant abnormalities. It is therefore an established procedure that the tubes be inspected, in-situ, prior to being placed in service and periodically thereafter so that the location and characteristics of such abnormalities, if any, can be determined, and a decision made as to the seriousness thereof and the corrective action to be taken.

Typically, the in-situ inspection of a tube in a vapour generator and in other types of heat exchangers must be made from the bore of the tube as support members such as support plates, tube sheets, headers and the like, prohibit the inspection being made from the exterior of the tube.

According to a first aspect of this invention there is provided apparatus for inspecting a ferromagnetic tube, for example an in-situ heat exchanger tube, wherein a resultant magnetic field of predetermined direction and magnitude, generated by the vector addition of two magnetic fields angularly displaced from one another, is induced into the wall of the tube. The resultant magnetic field may be a stationary field or a rotating helical magnetic field.

According to a second aspect of the invention there is provided apparatus for inspecting, in-situ, a heat exchanger tube, the apparatus comprising a scanner for traversing the tube, the scanner having a hollow cylindrical body, a field inducing arrangement for inducing into the wall of a tube a resultant magnetic field produced by the vectorial addition of first and second magnetic fields, the field inducing arrangement comprising a solenoid coil carried by the hollow cylindrical body in close proximity to the wall of the tube so as to generate the first magnetic field when energised by an electrical source and means for generating the second magnetic field, and an array of sensors disposed between the solenoid coil and the wall of the tube to generate output signals responsive to leakage flux produced by a flaw in the wall of the tube.

According to one preferred embodiment disclosed hereinbelow, the apparatus is located entirely within the bore of the heat exchanger tube.

Preferred embodiments of this invention described hereinbelow provide electromagnetic tube inspection apparatus which will, in-situ, locate and determine the characteristics of flaws in heat exchanger tubes. The apparatus can, in particular, be so designed as to be able to determine the location of and the characteristics of flaws in relatively long, small bore, thick-walled tubes in vapour generators and other types of heat exchanger, even if the cross-sectional area of the tube wall is greater than the cross-sectional area of the bore of the tube.

The invention will now be further described, by way of illustrative and non-limiting example, with reference to the accompanying drawings, in which like references designate like items throughout, and in which:

Figure 1 is a schematic illustration of an inspection apparatus embodying this invention as applied to the in-situ inspection of a typical relatively long, small bore, thick-walled heat exchanger tube;

Figure 2 illustrates a modified form of the inspection apparatus;

Figure 3 is a cross-sectional view taken along a line 3-3 of Figure 2 in the direction of the arrows;

Figure 4 illustrates a further modified form of the inspection apparatus; and

Figures 5A, 5B and 5C are elementary one-line diagrams of typical circuits which may be employed in the inspection apparatus.

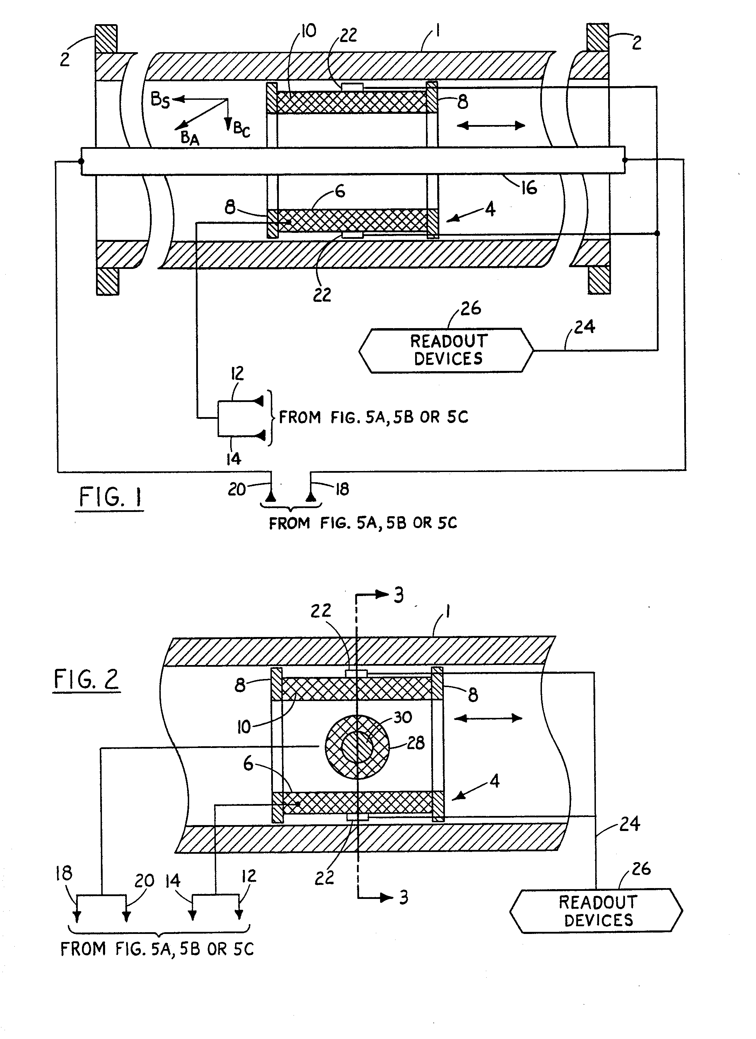

Figure 1 shows a fragment of a typical relatively long, small bore, thick-walled heat exchanger tube 1 which is held in fixed position by means such as support plates 2. Shown within the bore of the tube 1 is a scanner 4 which can be drawn through the tube 1. Various arrangements are known for drawing a scanner through a tube, one such arrangement intended for the scanning of tubes in a vapour generator being illustrated and described in US Patent No. US-A-4 172 492.

The scanner 4 is provided with a central cylindrical hollow core 6 and a rim 8 at either end which protrudes outwardly to serve to guide the scanner 4 when it is drawn through the tube 1. A solenoid winding 10, which can be energised through leads 12 and 14, is wound upon the core 6. When energised, the winding 10 produces a magnetic field $(B_s)$ parallel with the longitudinal axis of the tube 1.

A rigid conductor 16, which can be energised through leads 18 and 20, is centred within the tube 1. When energised, the conductor 16 produces a magnetic field $(B_c)$ normal to the longitudinal axis of the tube 1. When both the solenoid winding 10 and the conductor 16 are energised, a resultant magnetic field $(B_a)$, generated by the vector addition of the fields $(B_s)$ and $(B_c)$, is induced into the wall of the tube 1. The direction, magnitude and characteristics of the resultant magnetic field $(B_a)$ can be adjusted as required to meet the exigency of a specific application by adjusting the relative energisations of the solenoid winding 10 and conductor 16, as hereinafter explained in more detail.

An array of sensors 22 is mounted around the outer circumference of the solenoid winding 10 in close proximity to the inner wall of the tube 1. The array of sensors 22 is connected by way of cabled leads 24 to selected read-out devices schematically shown at 26. So long as the tube 1 is free from defects, the resultant magnetic field $(B_a)$ will have a constant configuration dependent solely upon the energisations of the solenoid winding 10 and conductor 16. When, however, the scanner 4 traverses a tube defect, the resultant magnetic field $(B_a)$ will be distorted, producing a leakage flux which is detected by one or more of the sensors 22.

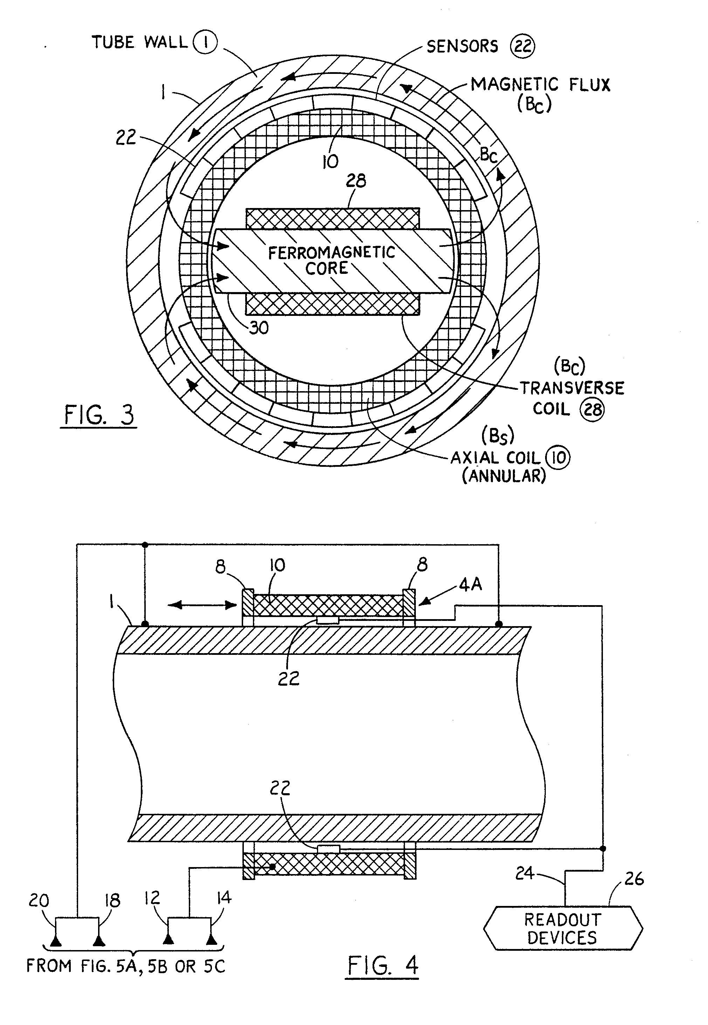

Figures 2 and 3 show a modified form of the scanner 4, Figure 3 being a longitudinal cross-section as viewed along a line 3-3 in Figure 2 in the direction of the arrows. In the modified form, a transverse solenoid coil 28, wound upon a ferromagnetic core 30, is disposed within the scanner 4. The transverse solenoid coil 28, when energised, produces the field or flux $(B_c)$.

Figure 4 shows a further modified form in which the tube 1 is energised through leads 18 and 20, thus producing the magnetic field or flux $(B_c)$. The solenoid winding 10 is, as shown, wound upon a scanner 4A surrounding the exterior of the tube 1. The winding 10, when energised through leads 12 and 14, produces the field or flux $(B_s)$. The rims 8 in this case protrude inwardly to guide the scanner 4A when it is drawn through the tube 1.

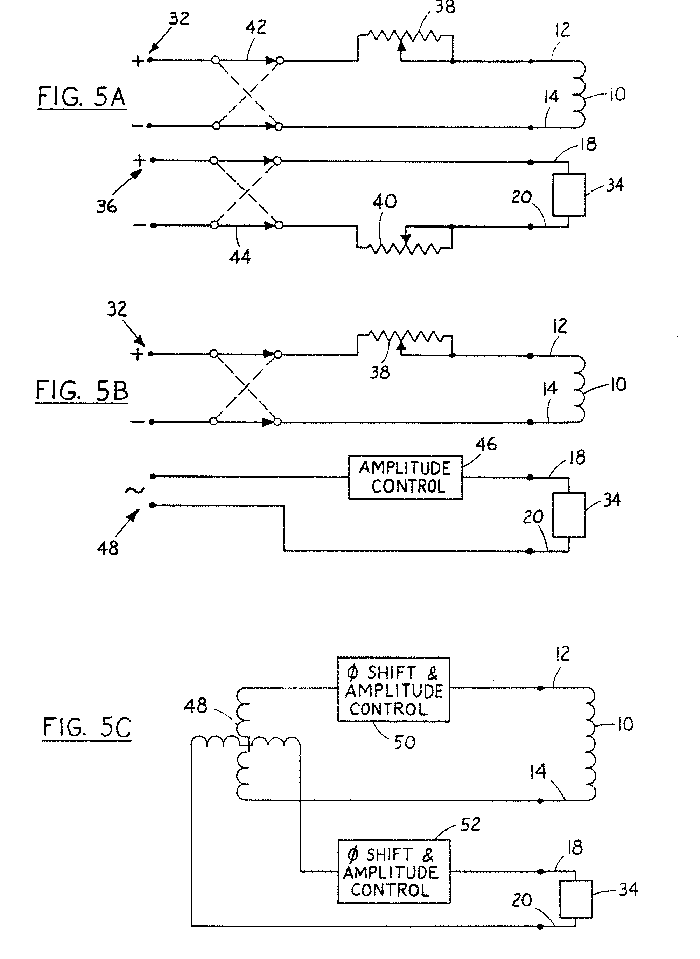

Means is provided for energising the solenoid coil 10 and the conductor 16, or the solenoid coil 28, or the tube 1, as the case may be, to generate a resultant flux $(B_a)$ having the characteristics required for a particular application. Thus, as shown in Figure 5A, the solenoid coil 10 producing the flux $(B_s)$ is energised from a d̲ c̲ source 32, whereas the conductor 16, or the solenoid coil 28, or the tube 1, as the case may be, schematically identified by a block 34 in Figures 5A to 5C, is energised by a d c source 36. Variable resistances 38, 40 provide a means whereby the resultant flux $(B_a)$ can be directed through substantially $180^\circ$, by means of pole reversal switches 42, 44, to completely scan the wall of the tube 1 in a direction substantially normal to any tube wall abnormality.

Figure 5B shows an arrangement in which the coil 10 is energised from the d c source 32, whereas the block 34 is energised from an a c source 48 of desired frequency through an amplitude control unit 46. As is evident, the coil 14 could be energised with a c from the source 48 through the amplitude control unit 46, and the block 34 energised from the d c source 32.

Figure 5C shows an arrangement in which the coil 10 and block 34 are energised from a polyphase source, such as a two-phase source 48, to produce a rotating helical resulting flux $(B_a)$ in the wall of the tube 1. The circuits to the coil 10 and block 34 may, if required, include phase shift and amplitude control units 50 and 52 to obtain a resultant flux $(B_a)$ of desired characteristics.

## CLAIMS

1. Apparatus for inspecting, in-situ, a heat exchanger tube, the apparatus comprising a scanner (4; 4A) for traversing the tube (1), the scanner having a hollow cylindrical body (6), a field inducing arrangement for inducing into the wall of a tube (1) a resultant magnetic field $(B_a)$ produced by the vectorial addition of first and second magnetic fields $(B_s, B_c)$, the field inducing arrangement comprising a solenoid coil (10) carried by the hollow cylindrical body (6) in close proximity to the wall of the tube (1) so as to generate the first magnetic field $(B_s)$ when energised by an electrical source and means for generating the second magnetic field $(B_c)$, and an array of sensors (22) disposed between the solenoid coil (10) and the wall of the tube (1) to generate output signals responsive to leakage flux produced by a flaw in the wall of the tube.

2. Apparatus according to claim 1, wherein the means for generating the second field $(B_c)$ comprises a conductor which will generate the second magnetic field $(B_c)$ when energised by a second electrical source.

3. Apparatus according to claim 2, wherein the conductor comprises a second solenoid coil (28) carried by the hollow cylindrical body (6).

4. Apparatus according to claim 3, wherein the second solenoid coil (28) is disposed within the hollow cylindrical body (6) perpendicular to the first-mentioned solenoid coil (10).

5. Apparatus according to claim 2, wherein the conductor comprises the wall of the tube (1).

6. Apparatus according to claim 2, wherein the conductor comprises a cylindrical conductor (16) centred within the tube (1).

7. Apparatus according to any one of claims 2 to 6, wherein a first electrical source is connected to energise the solenoid coil (10) to generate the first magnetic field $(B_s)$ and a second electrical source is connected to energise the conductor to generate the second magnetic field $(B_c)$, the first and second sources being out-of-phase alternating current sources to produce a resultant helical rotating magnetic field $(B_a)$ in the wall of the tube (10).

8. Apparatus according to any one of claims 2 to 6, wherein a first electrical source is connected to energise the solenoid coil (10) to generate the first magnetic field $(B_s)$ and a second electrical source is connected to energise the conductor to generate the second magnetic field $(B_c)$, the first and second sources being direct current sources.

9. Apparatus according to any one of claims 2 to 6, wherein a first electrical source is connected to energise the solenoid coil (10) to generate the first magnetic field $(B_s)$ and a second electrical source is connected to energise the conductor to generate the second magnetic field $(B_c)$, one of the sources being a direct current source and the other of the sources being an alternating current source.

10. Apparatus according to any one of claims 1 to 9, wherein the cylindrical body (6) is provided with an outwardly protruding rim (8) at either end extending beyond the array of sensors (22) to guide the scanner (4) when scanning the tube (1) from the bore of the tube.

11. Apparatus according to any one of claims 1 to 9, wherein the cylindrical body (6) is provided with an inwardly protruding rim (8) at either end extending beyond the array of sensors (22) to guide the scanner (4A) when scanning the tube (1) from the exterior of the tube.

FIG. 1

FIG. 2

0152687

TUBE WALL ①   SENSORS ㉒

MAGNETIC FLUX (B_C)

22

10

28

30

FERROMAGNETIC CORE

B_C

(B_C) TRANSVERSE COIL ㉘

(B_S) AXIAL COIL ⑩ (ANNULAR)

FIG. 3

8   10   8   4A

1   22

22

20  18  12  14

FROM FIG. 5A, 5B OR 5C

24   26

READOUT DEVICES

FIG. 4

FIG. 5A

FIG. 5B

FIG. 5C

Ø SHIFT & AMPLITUDE CONTROL

Ø SHIFT & AMPLITUDE CONTROL

AMPLITUDE CONTROL

## DOCUMENTS CONSIDERED TO BE RELEVANT

| Category | Citation of document with indication where appropriate, of relevant passages | Relevant to claim | CLASSIFICATION OF THE APPLICATION (Int. Cl.4) |
|---|---|---|---|
| D,A | US-A-4 172 492 (G.E. ABELL et al.) | | G 01 M 3/00<br>G 01 M 3/18 |
| | ----- | | |
| | | | **TECHNICAL FIELDS SEARCHED (Int. Cl.4)** |
| | | | G 01 M 3/00 |

The present search report has been drawn up for all claims

| Place of search | Date of completion of the search | Examiner |
|---|---|---|
| BERLIN | 19-04-1985 | KOEHN G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82